(19) Europäisches Patentamt
European Patent Office
Office européen des brevets

(11) **EP 2 724 175 B1**

(12) **EUROPÄISCHE PATENTSCHRIFT**

(45) Veröffentlichungstag und Bekanntmachung des Hinweises auf die Patenterteilung:
**20.05.2015   Patentblatt 2015/21**

(21) Anmeldenummer: **12729537.6**

(22) Anmeldetag: **19.06.2012**

(51) Int Cl.:
*G08G 1/04* (2006.01)          *G01S 7/41* (2006.01)
*G01S 13/91* (2006.01)         *G01S 17/88* (2006.01)
*G01S 13/58* (2006.01)         *G08G 1/01* (2006.01)

(86) Internationale Anmeldenummer:
**PCT/EP2012/061645**

(87) Internationale Veröffentlichungsnummer:
**WO 2012/175470 (27.12.2012 Gazette 2012/52)**

(54) **VERFAHREN UND VORRICHTUNG ZUR DETEKTION EINES SICH DREHENDEN RADES**

METHOD AND DEVICE FOR DETECTING A ROTATING WHEEL

PROCÉDÉ ET DISPOSITIF DE DÉTECTION D'UNE ROUE EN ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2011   EP 11450079**
             **21.06.2011   EP 11450080**

(43) Veröffentlichungstag der Anmeldung:
**30.04.2014   Patentblatt 2014/18**

(73) Patentinhaber: **Kapsch TrafficCom AG**
**1120 Wien (AT)**

(72) Erfinder:
• **STELZER, Andreas**
  **A-4040 Linz (AT)**
• **PICHLER, Markus**
  **A-4020 Linz (AT)**
• **PFEFFER, Clemens**
  **A-4040 Linz (AT)**
• **NAGY, Oliver**
  **A-1190 Wien (AT)**
• **SCHEIBLHOFER, Werner**
  **A-4030 Linz (AT)**
• **FEGER, Reinhard**
  **A-6351 Scheffau (AT)**

(74) Vertreter: **Weiser, Andreas**
**Patentanwalt**
**Kopfgasse 7**
**1130 Wien (AT)**

(56) Entgegenhaltungen:
**DE-A1- 19 928 624     DE-A1-102008 037 233**

**Beschreibung**

Die vorliegende Erfindung betrifft ein Verfahren und eine Vorrichtung zur Detektion eines sich drehenden Rades eines Fahrzeugs, das auf einer Fahrbahn in einer Fahrtrichtung fährt und dessen Räder zumindest teilweise seitlich freiliegen.

Das Detektieren von Fahrzeugrädern ist bei zahlreichen Anwendungen von Interesse. So kann aus dem Erkennen von Rädern mit Sicherheit das Befahren einer bestimmten Verkehrsfläche erkannt werden, beispielsweise zur Grenzüberwachung oder zur Auslösung bestimmter Aktionen, wie das Auslösen eines Alarms, Einschalten einer Beleuchtung, Öffnen eines Schrankens, Aufnehmen eines Fotos zu Überwachungszwecken usw. Auch moderne Verkehrsgebührensysteme stellen häufig zur Gebührenbemessung auf die Achsanzahl von Fahrzeugen ab, sodass das Detektieren von Rädern (Radachsen) auch eine wichtige Grundlage für die Erhebung oder Kontrolle von Straßenmautgebühren sein kann, insbesondere auch mittels mobiler Kontrollfahrzeuge, welche im Vorbeifahren oder im Gegenverkehr die Achszahl von mautpflichtigen Fahrzeugen kontrollieren sollen.

Aus der DE 10 2008 037 233 A1 ist es bekannt, Räder eines sich bewegenden Fahrzeugs aufgrund ihrer gegenüber dem restlichen Fahrzeug unterschiedlichen horizontalen Komponente der Tangentialgeschwindigkeit, die eine entsprechende Doppler-Frequenzverschiebung eines Radar-Messstrahls bewirkt, zu detektieren. Dazu wird ein Radar-Geschwindigkeitsmesser verwendet, welcher mit einer Radar-Strahlungskeule den unteren Bereich passierender Fahrzeuge bestrahlt und aus dem zurückerhaltenen Empfangsfrequenzgemisch ein einziges Geschwindigkeitsmesssignal zeitlich mittelt, das an den Orten der Räder Signalmaxima zeigt, die zur Raddetektion verwendet werden. Lücken zwischen einem Zugfahrzeug und seinem Anhänger können jedoch Signalminima und damit zwischenliegende "falsche" Maxima vortäuschen, welche zu einer fehlerhaften Raddetektion führen.

Die Erfindung setzt sich zum Ziel, Verfahren und Vorrichtungen zur Raddetektion zu schaffen, welche eine sicherere Detektion ermöglichen als die bekannten Lösungen.

Dieses Ziel wird in einem ersten Aspekt der Erfindung mit einem Verfahren erreicht, das sich auszeichnet durch die Schritte

Aussenden eines elektromagnetischen Messstrahls mit einem bekannten zeitlichen Verlauf seiner Frequenz auf einen ersten Bereich über der Fahrbahn in einer Richtung schräg zur Vertikalen und normal oder schräg zur Fahrtrichtung;

Empfangen eines reflektierten Messstrahls und Aufzeichnen des zeitlichen Verlaufs seiner Frequenzen relativ zum bekannten Verlauf als Empfangsfrequenzgemischverlauf; und

Detektieren eines über einen Zeitabschnitt kontinuierlich ansteigenden oder abfallenden Bandes von Frequenzen im Empfangsfrequenzgemischverlauf als Rad.

Die Erfindung beruht auf dem neuartigen Ansatz, ein sich an einem Doppler-Sensor etwa horizontal vorbeibewegendes Rad anhand eines während der Passage ansteigenden (z.B. wenn der Doppler-Sensor oberhalb der Radachse liegt, nach unten gerichtet ist und dem Rad entgegenkommt) oder abfallenden (z.B. wenn der Doppler-Sensor unterhalb der Radachse liegt, nach oben gerichtet ist und dem Rad entgegenkommt) Empfangsfrequenzgemischverlaufs zu detektieren. Anders als bei dem bekannten Stand der Technik (DE 10 2008 037 233 A1) wird nicht bloß ein Signalmaximum pro Rad ausgewertet, sondern der Signalverlauf während der Radpassage.

Im Idealfall eines linienförmigen Messstrahls, der das Rad von oben oder schräg von der Seite normal zur Fahrtrichtung trifft, ist der Verlauf der dopplereffektbedingten Frequenzverschiebung des reflektierten Messstrahls linienförmig ansteigend oder abfallend. Wenn der Messstrahl nicht normal, sondern schräg zur Fahrtrichtung gerichtet ist, addiert sich zu diesem Verlauf eine durch die Horizontalkomponenten der Tangentialgeschwindigkeit des Rades bedingte Dopplerverschiebung, welche zu einem additiven Offset des Verlaufs führt, jedoch an dem Detektionskriterium eines während der Radpassage ansteigenden oder abfallenden Empfangsfrequenzverlaufs nichts ändert.

Darüberhinaus ist in der Realität der Strahlquerschnitt eines Messstrahls niemals ideal punktförmig sondern stets ausgedehnt, z.B. auf einen Auftreffbereich auf dem Fahrzeug in der Größenordnung von einigen Zentimetern oder einigen zig Zentimetern. Dadurch werden die Empfangsfrequenzen von dem geschilderten linienförmigen Verlauf zu einem "Gemisch" bzw. "Band" von Empfangsfrequenzen verbreitert bzw. aufgespreizt: Denn auf variierenden Höhen- und Breitenpositionen im Auftreffbereich des Messstrahls hat das sich drehende Rad jeweils variierende Vertikal- und Horizontalkomponenten der Tangentialgeschwindigkeit und erzeugt damit unterschiedliche Dopplerfrequenzverschiebungen, welche zu einer "Aufsplitterung" bzw. "Aufspreizung" der Sendefrequenz des Messstrahls auf eine Vielzahl gleichzeitig reflektierter Empfangsfrequenzen, ein "Empfangsfrequenzgemisch" führt; über die Zeit betrachtet verläuft das Empfangsfrequenzgemisch in der Art eines Bandes in der Frequenz/Zeit-Ebene, mit dem geschilderten ansteigenden oder abfallenden Verlauf.

Dieser radgeschwindigkeitsbedingte Aufspreizungseffekt ist von einem zweiten parasitären Frequenzaufspreizungseffekt überlagert, welcher auf die unterschiedlichen Projektionswinkel der Vertikal- und Horizontalkomponente der Tangentialgeschwindigkeit auf die Richtung zum Empfänger zurückzuführen ist: Dieser Projektionswinkel variiert je nach betrachtetem Reflexionsort im Auftreffbereich. Der zweite Aufspreizungseffekt ist davon unabhängig, ob gerade die Fahrzeugkarosserie oder das sich drehende Rad den Empfänger passiert, und ist einzig durch die geometrischen Randbedingungen der Messanordnung bestimmt. Beide Effekte überlagern sich zu dem genannten bandförmigen Empfangsfrequenzgemischverlauf über der Zeit.

In einer ersten Ausführungsform der Erfindung kann das genannte Detektieren durch Auswerten des Verlaufs des Frequenzmittels des Bandes erfolgen, welches Frequenzmittel während der Radpassage den geschilderten Anstieg oder Abfall zeigt.

In einer zweiten Ausführungsform der Erfindung kann das genannte Detektieren durch Überprüfen, ob das Band in einen vorgegebenen Umriss in der Frequenz/Zeit-Ebene fällt, erfolgen. Der Umriss stellt die maximalen Grenzen dar, innerhalb deren Empfangsfrequenzverläufe für verschiedene Abtastverläufe auftreten können, und wenn die Messwerte der Dopplerempfangsfrequenzen über die Zeit alle in den genannten Umriss fallen, liegt ein über einen Zeitabschnitt kontinuierlich ansteigendes oder abfallendes Band von Frequenzen im Empfangsfrequenzgemischverlauf vor, was ein Rad anzeigt.

Gemäß einer bevorzugten Ausführungsform der Erfindung wird der Messstrahl normal zur Fahrtrichtung schräg nach unten ausgesandt. Dadurch können einerseits Abschattungen der Räder minimiert und die Lücke zwischen einem Anhänger und einem Zugfahrzeug sicher erkannt werden, und andererseits werden - mit Ausnahme der oben genannten Aufspreizungseffekte - die Horizontalgeschwindigkeitskomponenten des sich drehenden Rades sowie die Geschwindigkeitskomponente des Fahrzeugs ausgeblendet, was die Detektion der genannten ansteigenden und abfallenden Bänder im Empfangsfrequenzgemischverlauf erleichtert.

Zur weiteren Verbesserung der Banddetektion kann das erfindungsgemäße Verfahren in einer optionalen Ausführungsform die folgenden Schritte umfassen:

> Messen der Geschwindigkeit der Karosserie des Fahrzeugs relativ zu dem Ort der Aussendung des Messstrahls und des Empfangs des reflektierten Messstrahls; und
> Kompensieren des Empfangsfrequenzgemischverlaufs um jene Frequenzanteile, die durch die Geschwindigkeit der Karosserie verursacht sind, bevor der genannte Schritt des Detektierens des Bandes durchgeführt wird.

Aus denselben Gründen kann das Verfahren der Erfindung optional auch umfassen:

> Detektieren der Anwesenheit eines Karosserieteils des Fahrzeugs in einem zweiten Bereich, der oberhalb des ersten Bereichs liegt, im zeitlichen Verlauf als Passagezeitfenster;
> wobei das Detektieren eines Rades im Empfangsfrequenzgemischverlauf nur während des Passagezeitfensters durchgeführt wird.

In Kenntnis des Passagezeitfensters des Fahrzeugs kann der gemessene Empfangsfrequenzgemischverlauf weiter aufbereitet werden, um die Banddetektion darin zu erleichtern, und zwar durch die Schritte:

> Bestimmen eines Störsignalanteils in einem dem Passagezeitfenster unmittelbar vorausgehenden Abschnitt des Empfangsfrequenzgemischverlaufs; und
> Kompensieren des Empfangsfrequenzgemischverlaufs im Passagezeitfenster um den Störsignalanteil, bevor der genannte Schritt des Detektierens des Bandes durchgeführt wird.

In noch einer weiteren Ausführungsform des erfindungsgemäßen Verfahrens werden Räder, die während ein und desselben Passagezeitfensters detektiert werden, ein und demselben Fahrzeug zugeordnet. Die Radanzahl eines Fahrzeugs kann als Grundlage für eine z.B. radachsenabhängige Straßenmautverrechnung herangezogen werden.

Um die genannten parasitären Aufspreizungseffekte gering zu halten und einen ausgeprägten ansteigenden oder abfallenden Verlauf des Empfangsfrequenzgemischs zu erzielen, wird der Auftreffbereich des Messstrahls auf dem Fahrzeug bevorzugt minimiert. Bevorzugt hat dazu der Messstrahl einen Auftreffbereich, dessen Durchmesser kleiner als ein zu detektierendes Rad ist, bevorzugt kleiner 10 cm, besonders bevorzugt kleiner 5 cm.

In einer Variante der Erfindung kann dazu ein gebündelter Laserstrahl verwendet werden, oder der Messstrahl ist in einer alternativen, bevorzugten Variante ein von einer Richtantenne ausgesandter Radarstrahl, bevorzugt im Frequenzbereich über 70 GHz. Bei solch hohen Frequenzen ist die Wellenlänge sehr klein und dadurch lassen sich Antennen mit hohem Antennengewinn mechanisch sehr klein realisieren, z.B. in Form von Hornantennen oder Antennenarrays.

In einem zweiten Aspekt schafft die Erfindung eine Vorrichtung zur Detektion eines sich drehenden Rades eines Fahrzeugs, das auf einer Fahrbahn in einer Fahrtrichtung fährt und dessen Räder zumindest teilweise seitlich freiliegen, gekennzeichnet durch

ein Doppler-Lidar- oder -Radargerät, das einen elektromagnetischen Messstrahl mit einem bekannten zeitlichen Verlauf seiner Frequenz schräg zur Vertikalen und normal oder schräg zur Fahrtrichtung auf ein Ziel über der Fahrbahn aussendet und

den zeitlichen Verlauf der Frequenzen des vom Ziel reflektierten Messstrahls relativ zum bekannten Verlauf als Empfangsfrequenzgemischverlauf aufzeichnet, und

eine nachgeordnete Auswerteeinrichtung, welche dafür ausgebildet ist, ein über einen Zeitabschnitt kontinuierlich abfallendes oder ansteigendes Band von Frequenzen im Empfangsfrequenzgemischverlauf als Rad zu detektieren.

Hinsichtlich der Vorteile der erfindungsgemäßen Vorrichtung wird auf die obigen Ausführungen zum erfindungsgemäßen Verfahren verwiesen.

Bevorzugt ist der Messstrahl des Doppler-Lidar- oder -Radargeräts normal zur Fahrtrichtung schräg nach unten orientiert.

Besonders günstig ist es, wenn die Vorrichtung einen mit der Auswerteeinrichtung verbundenen Sensor zum Messen der Geschwindigkeit der Karosserie des Fahrzeugs hat, wobei die Auswerteeinrichtung den Empfangsfrequenzgemischverlauf um jene Frequenzanteile, die durch die Geschwindigkeit der Karosserie verursacht sind, kompensiert.

Gemäß einem weiteren bevorzugten Merkmal umfasst die Vorrichtung einen mit der Auswerteeinrichtung verbundenen Sensor, der die Anwesenheit eines Karosserieteils des Fahrzeugs oberhalb des Bereichs, auf den der Messstrahl gerichtet ist, im zeitlichen Verlauf als Passagezeitfenster detektiert, wobei die Auswerteeinrichtung ein Rad im Empfangsfrequenzgemischverlauf nur während des Passagezeitfensters detektiert. Dabei kann die Auswerteeinrichtung optional dafür ausgebildet sein, einen Störsignalanteil in einem dem Passagezeitfenster unmittelbar vorausgehenden Abschnitt des Empfangsfrequenzgemischverlaufs zu bestimmen und den Empfangsfrequenzgemischverlauf im Passagezeitfenster um den Störsignalanteil zu kompensieren.

Im Falle eines Doppler-Radargeräts ist dessen Messstrahl bevorzugt ein von einer Richtantenne ausgesandter Radarstrahl, besonders bevorzugt im Frequenzbereich über 70 GHz; im Falle eines Lidar-Radargeräts ist der Messstrahl bevorzugt ein gebündelter Laserstrahl.

Die Vorrichtung der Erfindung eignet sich sowohl für den stationären als auch für den transportablen, insbesondere mobilen Einsatz. In ersterem Falle kann die Vorrichtung - wenn sie mit einem Doppler-Radargerät arbeitet - besonders zum Zusammenbau mit den Funkbaken einer bereits vorhandenen Funk-Straßeninfrastruktur, wie WLAN (wireless local area network), WAVE (wireless access in a vehicle environment) oder DSRC (dedicated short range communication) ausgebildet werden. In einer zweckmäßigen Ausführungsform ist das Doppler-Radargerät durch eine straßenseitige WLAN-, WAVE- oder DSRC-Funkbake gebildet. Im zweiten Falle wird bevorzugt das Doppler-Lidar- oder -Radargerät auf einer mobilen Plattform montiert, insbesondere auf einem Kontrollfahrzeug, um die Kontrolle von Fahrzeugen auf anderen Fahrspuren oder des Gegenverkehrs zu ermöglichen.

Weitere Merkmale und Vorteile des Verfahrens und der Vorrichtung der Erfindung ergeben sich aus der nachfolgenden Beschreibung eines bevorzugten Ausführungsbeispiels unter Bezugnahme auf die begleitenden Zeichnungen, in denen zeigen:

die Fig. 1 und 2 die Vorrichtung der Erfindung montiert auf einem Kontrollfahrzeug in Verbindung mit einem von ihr kontrollierten Fahrzeug einmal in der Draufsicht (Fig. 1) und einmal in Fahrtrichtung gesehen (Fig. 2);

Fig. 3 die Geschwindigkeitsverhältnisse an einem sich drehenden Rad im Detail;

Fig. 4 einen beispielhaften Empfangsfrequenzgemischverlauf in der Frequenz/Zeit-Ebene bei Vermessung des Rades von Fig. 3 seitlich von oben und normal zur Fahrtrichtung im Gegenverkehr;

Fig. 5 die Herleitung eines Detektionsumrisses für das Detektieren eines ansteigenden oder abfallenden Bandes im Empfangsfrequenzgemischverlauf in der Frequenz/Zeit-Ebene;

Fig. 6 die geometrischen Verhältnisse in einem real ausgedehntem Messstrahl zur Veranschaulichung der geschwindigkeits- und geometriebedingten Frequenzaufspreizungseffekte;

die Fig. 7a bis 7g beispielhafte idealisierte Empfangsfrequenzverläufe bzw. Frequenzmittel von Empfangsfrequenzgemischverläufen bei unterschiedlichen Winkelstellungen des Doppler-Messstrahls relativ zum Rad;

Fig. 8 den Effekt der geometriebedingten Frequenzaufspreizung bei der Passage eines Fahrzeugs im zeitlichen Verlauf; und

Fig. 9 die Auswirkung der Effekte von geschwindigkeitsbedingter und geometriebedingter Frequenzaufspreizung des Empfangsfrequenzgemischverlaufs bei der Passage eines Fahrzeugs mit zwei beispielhaften Rädern, wobei in der linken und der rechten Hälfte von Fig. 9 zwei verschiedene Messstrahlquerschnitte verwendet wurden.

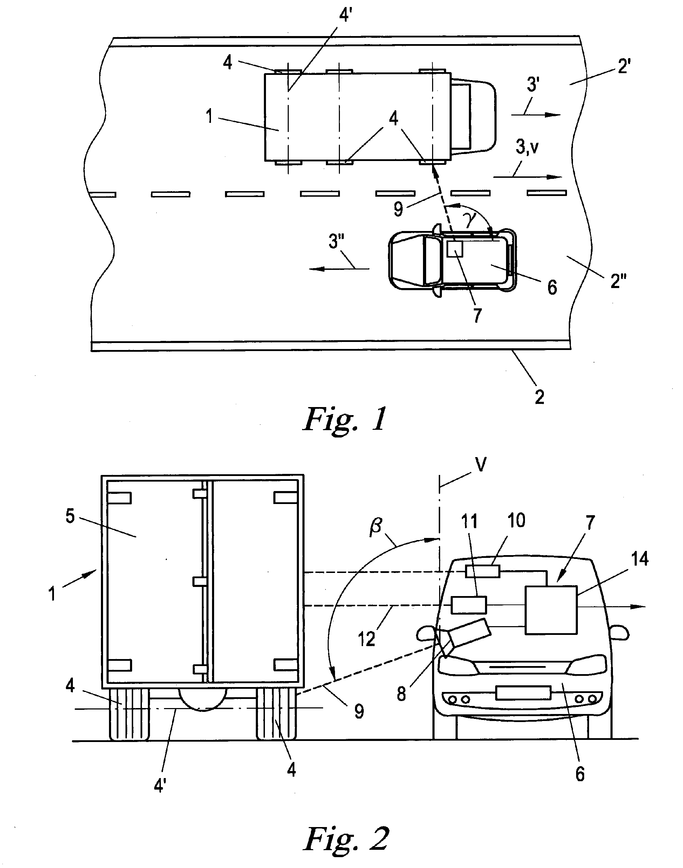

In den Fig. 1 und 2 bewegt sich ein Fahrzeug 1 auf einer Fahrbahn 2, genauer auf einer Fahrspur 2' der Fahrbahn 2, in einer Fahrtrichtung 3'. Das Fahrzeug 1 besitzt Räder 4, welche nach unten über die Karosserie 5 des Fahrzeugs 2 vorragen und dabei - zumindest teilweise - an den Seiten der Karosserie 5 in Ausnehmungen derselben freiliegen, d.h. von der Seite her sichtbar sind.

Auf einer zweiten Fahrspur 2" der Fahrbahn 2 bewegt sich ein Kontrollfahrzeug 6 in einer entgegengesetzten Fahrtrichtung 3". Die Fahrtrichtungen 3', 3" sind bevorzugt antiparallel, könnten jedoch auch parallel sein, d.h. das Kontrollfahrzeug 6 könnte das Fahrzeug 1 überholen oder umgekehrt. Das Kontrollfahrzeug 6 könnte auch stationär sein, und die Fahrtrichtungen 3', 3" könnten nicht-parallel sein; im Weiteren wird als Fahrtrichtung 3 des Fahrzeugs 1 die Relativbewegungsrichtung des Fahrzeugs 1 gegenüber dem Kontrollfahrzeug 6 bezeichnet. Der Einfachheit halber wird auch davon ausgegangen, dass die Fahrtrichtung 3 normal zu den Achsen 4' der Räder 4 und etwa horizontal verlauft, auch wenn dies nicht zwingend ist und Abweichungen davon sich lediglich in entsprechend veränderten Winkelprojektionen der nachfolgend betrachteten Geschwindigkeitskomponenten widerspiegeln.

Das Kontrollfahrzeug 6 trägt eine Messvorrichtung 7 mit einem Doppler-Lidar- oder -Radargerät 8, welches einen elektromagnetischen Messstrahl 9, hier einen Lidar- oder Radar-Messstrahl, auf das Fahrzeug 1 bzw. dessen Räder 4 bei der Passage aussendet, um so die Räder 4 des Fahrzeugs 1 zu detektieren. Der Messstrahl 9 ist unter einem Winkel $\beta$ zur Vertikalen V und unter einem Winkel $\gamma$ zur Fahrtrichtung 3 orientiert. Der Winkel $\beta$ ist $0 \leq \beta < 90°$ oder $90° < \beta \leq 180°$, jedenfalls $\neq 90°$, d.h. der Messstrahl 9 verläuft schräg zur Vertikalen V, bevorzugt schräg nach unten wie gezeigt, z.B. in einem Winkel von $\beta = 100°$ bis $170°$, bevorzugt $\beta = 120°$ bis $150°$. In einer alternativen (nicht gezeigten) Ausführungsform könnte der Messstrahl 9 auch schräg nach oben gerichtet sein, z.B. $\beta = 10°$ bis $80°$, bevorzugt $\beta = 30°$ bis $60°$, wenn das Doppler-Lidar/Radar-Gerät 8 in Bodennähe, z.B. ortsfest seitlich der Straße 2, montiert ist und Fahrzeuge 1 und deren Räder 4 schräg von unten anpeilt.

Der Winkel $\gamma$ beträgt bevorzugt 90°, d.h. der Messstrahl 8 ist normal zur Fahrtrichtung 3 orientiert. In alternativen Varianten der Erfindung kann der Winkel $\gamma$ auch $\neq 90°$ sein, z.B. schräg nach vorne oder schräg nach hinten gerichtet vom Kontrollfahrzeug 6 aus gesehen.

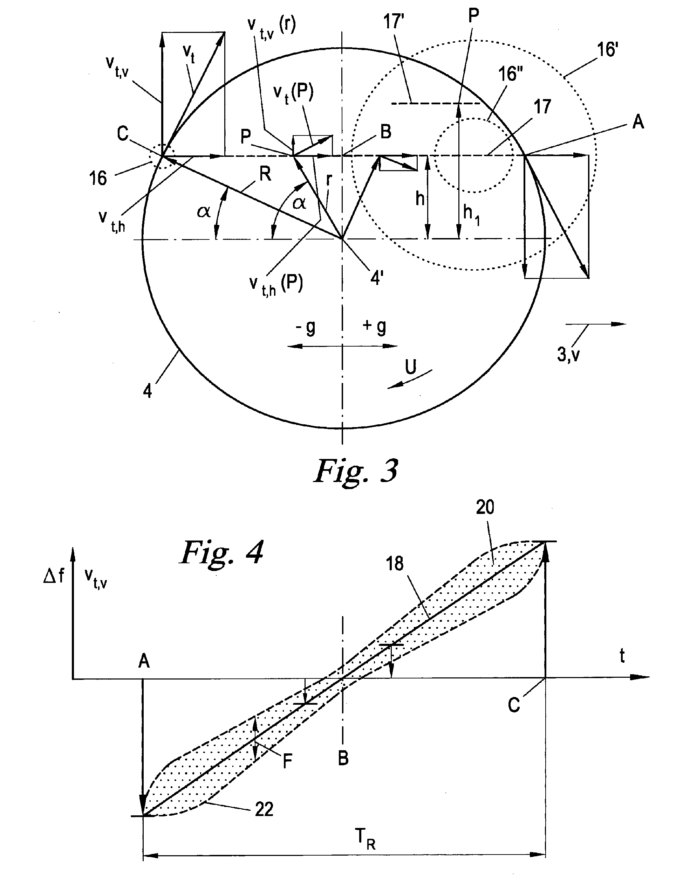

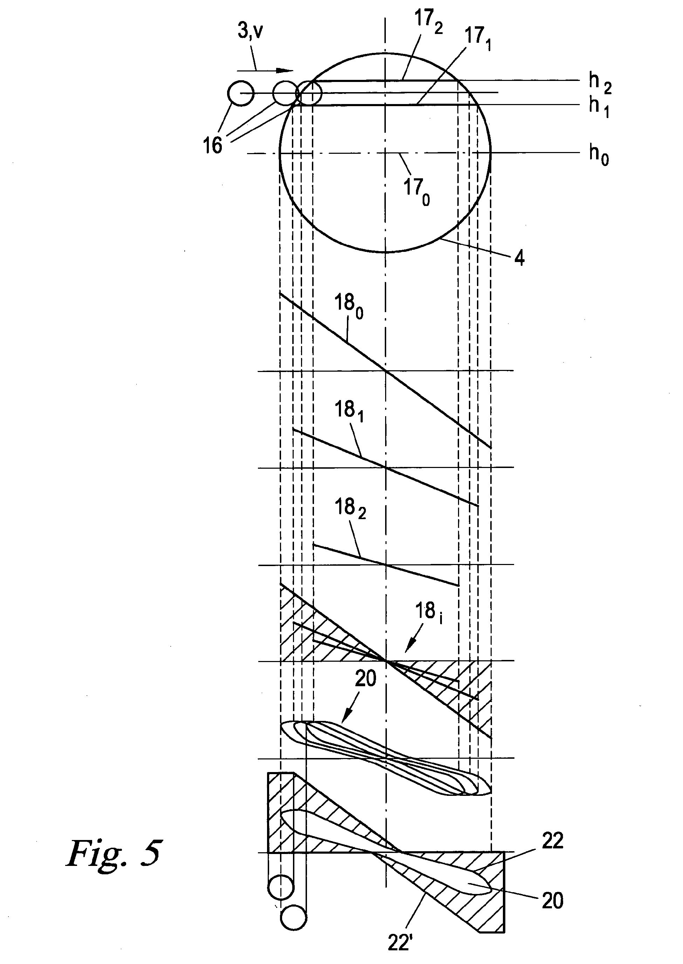

Das Doppler-Lidar- bzw. -Radargerät 8 wertet, wie in der Technik bekannt, die Empfangsfrequenz des vom Fahrzeug 1 bzw. seinen Rädern 4 reflektierten Messstrahls 9 aus, wobei aus der dopplereffektbedingten Frequenzverschiebung zwischen ausgesandtem und reflektiertem Messstrahl 9 die in Richtung des Messstrahls 9 liegende (projizierte) Komponente $v_p$ der Relativgeschwindigkeit v des Fahrzeugs 1 bzw. der Tangentialgeschwindigkeit $v_t$ des Rades 4 am jeweiligen Punkt P des Auftreffbereichs des Messstrahls 9 (siehe Fig. 3 und 5) ermittelt werden kann. In weiterer Folge können aus dieser Information die Räder 4 des Fahrzeugs 1 detektiert werden, wie später noch im Detail erklärt wird.

Das Doppler-Lidar/Radar-Gerät 8 kann an sich von jeder in der Technik bekannten Art sein, sei es mit einem kontinuierlichen, modulierten oder einem gepulsten Messstrahl 9. Bei einem kontinuierlichen Messstrahl 9 kann eine Dopplerfrequenzverschiebung zwischen den Eigenfrequenzen ("Trägerfrequenzen") des ausgesandten und des reflektierten Messstrahl 9 z.B. durch Interferenzmessung ermittelt werden. Bei einem gepulsten oder modulierten Messstrahl kann eine Dopplerverschiebung zwischen den Impulsraten bzw. Modulationsfrequenzen des ausgesandten und des reflektierten Messstrahls 9 gemessen werden. Alle solche Eigen-, Träger-, Impuls- oder Modulationsfrequenzen werden unter den hier verwendeten Begriffen der "Sendefrequenz" des Messstrahls 9 und "Empfangsfrequenz" des reflektierten Messstrahls 9 verstanden, d.h. der Begriff Empfangsfrequenz umfasst jedwede durch einen Dopplereffekt beeinflussbare Frequenz des Messstrahls 9.

Wie in Fig. 2 gezeigt, umfasst die Messvorrichtung 7 ferner einen Geschwindigkeitssensor 10 zum Messen der (Relativ-) Geschwindigkeit v des Fahrzeug 1 gegenüber dem Kontrollfahrzeug 6 sowie einen Anwesenheitssensor 11 zur Detektion der Anwesenheit eines Teils der Karosserie 5 bei der Passage des Fahrzeugs 1 am Kontrollfahrzeug 6. Der Anwesenheitssensor 11 "sieht" und detektiert die Karosserie 5 in dem Bereich, in dem auch der Messstrahl 9 auf das Fahrzeug 1 gerichtet ist, bei der Fahrzeugpassage, woraus ein Passagezeitfenster $T_F$ des Fahrzeugs 1 gegenüber dem Lidar/Radar-Gerät 8 ermittelt werden kann, wie später noch ausführlicher erläutert. Der Anwesenheitssensor 11 und seine Blickachse 12 sind bevorzugt über dem Messstrahl 9 des Lidar/Radar-Geräts 8 - oder in bekannter geometrischer Beziehung dazu - angeordnet, um eine zeitliche Zuordnung zwischen dem Passagezeitfenster $T_F$ und den Messsignalen des Lidar/RadarGeräts 8 zu erhalten. Aus dem Passagezeitfenster $T_F$ kann in Kenntnis der vom Sensor 10 gemessenen Geschwindigkeit v auch die Länge L des Fahrzeugs 1 berechnet werden gemäß $L = dz \cdot T$.

Das Lidar/Radar-Gerät 8 und die Geschwindigkeits- und Anwesenheitssensoren 10, 11 sind an eine Auswerteeinrichtung 14 der Vorrichtung 7 angeschlossen, welche die nun erläuterten Auswertberechnungen zur Raddetektion durchführt.

Fig. 3 zeigt verschiedene Ausbildungen des Messstrahls 9 hinsichtlich seiner Bündelung bzw. Ausdehnung anhand mehrerer beispielhafter Auftreffbereiche 16, 16', 16" unterschiedlicher Größe auf einem Rad 4. In einer ersten Variante ist der Messstrahl 9 stark gebündelt, sodass sein Auftreffbereich 16 auf der Karosserie 5 bzw. dem Rad 4 einen äußerst geringen Durchmesser im Bereich von einigen Zentimetern, bevorzugt < 2 cm, hat. Je nach Entfernung des Geräts 8 vom Fahrzeug 1 sind dazu bestimmte Anforderungen an die Bündelung des Messstrahls 9 zu stellen: Im Idealfall ist der Messstrahl 9 ein Bündel nahezu paralleler Licht- bzw. Radarstrahlen, wie es bevorzugt mit einem Laser erhalten werden kann. Doch auch bei einem Radar-Messstrahl lässt sich eine entsprechende Bündelung erreichen, indem Radarwellen sehr hoher Frequenz, bevorzugt über 70 GHz, verwendet werden, welche annähernd Lichteigenschaften haben und sich wie Licht bündeln lassen, z.B. durch Radarlinsen. Auch der Einsatz von Richtantennen, z.B. Hornantennen, Antennenarrays und Patchantennen mit möglichst paralleler, kleindurchmessriger Abstrahlcharakteristik erzeugt einen entsprechenden Radar-Messstrahl. Besonders geeignet sind hierfür Radargeräte aus dem Automobilbereich, wie sie z.B. in Fahrzeugen als Kollisions- und Abstandswarngeräte eingebaut werden. Solche gebündelten Messstrahlen 9 haben eine Bündelung bzw. einen Divergenz- oder Auffächerungsbereich (Öffnungswinkel) von weniger als 1° (entspricht einem Raumwinkel von weniger als ca. 0,00024 sr).

In einer zweiten Ausführungsform ist der Messstrahl 9 stärker aufgefächert, z.B. flächig oder trichterförmig gestreut bzw. aufgeweitet, in der Art einer "Messstrahlkeule", mit einem wesentlich größerem Auftreffbereich 16'. Ein solcher Auftreffbereich 16' kann bei einem Lidargerät z.B. durch eine vorgesetzte Zerstreuungslinse erreicht werden oder tritt bei Radargeräten auf, deren Bündelung nicht exakt ist.

Im Falle von Radar wird ein aufgeweiteter Messstrahl 9 durch den Öffnungswinkel der verwendeten Radarantenne charakterisiert. Unter dem Öffnungswinkel (oder auch Halbwertsbreite) einer Richtantenne bezeichnet man jeweils die Punkte, wo die Leistung gegenüber dem Maximum auf die Hälfte (-3 dB) abgefallen ist. Wie dem Fachmann geläufig, kann für Richtantennen aus der Kenntnis der jeweiligen Öffnungswinkel der Gewinn der Antenne in ihrer Hauptstrahlrichtung mit folgender Formel geschätzt werden:

$$g = 10 \lg \frac{27.000}{\Delta\varphi\,\Delta\vartheta}$$

wobei

$g$ = Gewinn [dBi]
$\Delta\varphi$ = Horizontaler Öffnungswinkel (in Grad)
$\Delta\vartheta$ = Vertikaler Öffnungswinkel (in Grad)

Der Öffnungswinkel der Radarantenne des Geräts 8 sollte eine gute Separierung der einzelnen Räder 4 im Messsignal des zu detektierenden Fahrzeugs 1 erlauben. Günstig ist es z.B., wenn der Auftreffbereich 16' des Messstrahls 9 den halben Raddurchmesser nicht übersteigt. Der optimale Auftreffbereich 16' ergibt sich hier aus dem Messabstand zum Fahrzeug 1, somit hängt auch die Wahl der Radarantenne von der Geometrie der Gesamtanordnung ab. Besonders geeignet sind allgemein Antennen mit einem Gewinn g von über 10 dB, abhängig von der Anordnung und Frequenz des Radargeräts 8.

Richtantennen weisen üblicherweise einen Antennengewinn g von über 20 dB (entspricht einem Öffnungswinkel $\varphi\Delta = \Delta\vartheta$ = ca. 16°). Somit lässt sich bei 20 dB Antennengewinn in 1 m Abstand zwischen Fahrzeug 1 und Kontrollfahrzeug 6 ein Bereich 16' von ca. 28 cm Durchmesser beleuchten. Für weiter entfernte Fahrzeuge 1 kann ein Antennengewinn g von 30 dB notwendig sein, um einen Öffnungswinkel $\Delta\varphi = A\vartheta$ = ca. 5° zu erreichen, der in 3 m Abstand einen Bereich 16' von ca. 30 cm Ausleuchtung bedeutet.

In einer dritten Variante ist die Größe des Auftreffbereichs 16" des Messstrahls 9 auf einem Rad 4 zwischen den beiden Varianten 16 und 16', z.B. im Bereich von 2 - 10 cm, bevorzugt 2 - 5 cm.

Fig. 3 zeigt die Bewegung des Auftreffbereichs 16, 16', 16" während der gegenseitigen Passage von Fahrzeug 1 und Kontrollfahrzeug 6 entlang einer Abtastlinie 17, die im gezeigten Beispiel das Rad 4 etwa in der Mitte seiner oberen Hälfte schneidet. Die jeweils an einem Punkt P der Abtastlinie 17 auf dem Radius r auftretende Tangentialgeschwindigkeit $v_t$ bzw. $v_t(P)$ des Punktes P des sich in Umdrehungsrichtung U drehenden Rades 4 kann jeweils in eine Horizontalkomponente $v_{t,h}(P)$ und eine Vertikalkomponente $v_{t,v}(P)$ zerlegt werden. Die Horizontalkomponente $v_{t,h}(P)$ bleibt bei der Passage des Rades 4 auf einer vorgegebenen horizontalen Abtastlinie 17 im Wesentlichen konstant, während sich die Vertikalkomponente $v_{t,v}(P)$ von einem negativen Maximalwert $v_{t,v}(A)$ an einem Punkt A am Radumfang über den Wert 0 bei einem Punkt B über der Radachse 4' bis zu einem positiven Maximalwert $v_{t,v}(C)$ an einem Punkt C am anderen Radumfang ändert.

Im Detail ist die Tangentialgeschwindigkeit $v_t(r)$ auf einem Radius r proportional diesem Radius r, u.zw. gemäß

$$v_t(r) = \frac{r}{R} v_t \qquad\qquad (1)$$

Die Vertikalkomponente $v_{t,v}(r)$ der Tangentialgeschwindigkeit $v_t(r)$ unter einem Winkel $\alpha$ ist eine Cosinus-Projektion entsprechend

$$v_{t,v}(r) = \frac{r}{R} v_t \cos\alpha \qquad\qquad (2)$$

Mit

$$\cos \alpha = \frac{g}{r} \qquad\qquad (3)$$

ergibt sich die Tangentialgeschwindigkeits-Vertikalkomponente $v_{t,v}(r)$ damit zu

$$v_{tv}(r) = v_t \frac{g}{R} \qquad\qquad (4)$$

wobei g der horizontale Abstand zum Radmittelpunkt und somit - bei Abtastung mit konstanter Geschwindigkeit v - proportional zur Zeit t ist, was einen linearen Anstieg bzw. Abfall beschreibt.

Wenn der Messstrahl 9 normal zur Fahrtrichtung ($\gamma = 90°$) und z.B. schräg von oben ($90° << \beta < 180°$) gerichtet wird, dann misst das Lidar/Radar-Gerät 8 eine dopplerbedingte Frequenzverschiebung $\Delta f$, welche genau dieser Vertikalkomponente $v_{t,v}(P)$ entspricht. Die Frequenzverschiebung $\Delta f$ ist in Fig. 4 über der Zeit t als Empfangsfrequenzverlauf 18 aufgetragen. Die Dopplerverschiebung $\Delta f$ der Empfangsfrequenz gegenüber der Sendefrequenz ist proportional zur vertikalen Geschwindigkeitskomponente $v_{t,v}$ der jeweils abgetasteten Teile (Punkte P) des Fahrzeugs 1 bzw. Rades 4; der in Fig. 4 dargestellte Empfangsfrequenzverlauf 18 ist daher gleichbedeutend mit einem Vertikalgeschwindigkeitsverlauf.

Der Empfangsfrequenzverlauf 18 von Fig. 4 ist ein idealisierter Verlauf für einen idealisierten Messstrahl 9 mit einem punktförmigen Strahlquerschnitt. Der Verlauf 18 zeigt über einen Zeitabschnitt $T_R$, welcher einer Abtastung des Rades 4 entlang der Abtastlinie 17 mit der Geschwindigkeit v entspricht, einen linearen, durch den Nullpunkt gehenden Anstieg von $v_{t,v}(A)$ auf $v_{t,v}(B)$. Würde der Messstrahl 9 schräg von unten auf das Rad 4 gerichtet ($\beta > 90°$) oder in umgekehrter Richtung entlang der Abtastlinie 17 bewegt (z.B. Kontrollfahrzeug 6 überholt Fahrzeug 1), dann zeigt der Empfangsfrequenzverlauf 18 einen Abfall, d.h. ist um die Zeitachse t von Fig. 4 gespiegelt.

Aufgrund der Ausdehnung des Auftreffbereichs 16, 16' bzw. 16" eines realen, nicht-realisierten Messstrahls 9 werden für jede zu einem bestimmten Zeitpunkt t ausgesandte Sendefrequenz nicht nur eine dopplerbedingt versetzte Empfangsfrequenz im reflektierten Messstrahl 9 erhalten, sondern ausgehend von jedem verschiedenen Punkt im Auftreffbereich 16, 16', 16" eine geringfügig abweichende Empfangsfrequenz. Dies ist zum einen dadurch bedingt, dass auf einer von der Höhe h des Abtastverlaufes 17 abweichenden Höhe $h_1$ des Rades 4 die Vertikalkomponente $v_{t,v}$ (und auch die Horizontalkomponente $v_{t,h}$) der Radtangentialgeschwindigkeit $v_t$ jeweils einen geringfügig anderen Wert haben, sodass sich die von verschiedenen im Bereich 16, 16', 16" liegenden Auftreffpunkten P - vgl. den beispielhaften Abtastverlauf 17' in Fig. 3 - jeweils herrührenden Empfangsfrequenzen zu einem Gemisch verschiedener Empfangsfrequenzen bzw. Geschwindigkeiten superponieren, siehe Fig. 4.

Mit anderen Worten splittet bzw. spreizt sich während der Passage $T_F$ eines Fahrzeugs 1 bei Auftreten eines Rades 4 die Empfangsfrequenz f in ein dopplereffektbedingtes Gemisch F von Empfangsfrequenzen (bzw. Geschwindigkeiten) auf, was zu einem Empfangsfrequenzgemischverlauf 20 über der Zeit t führt.

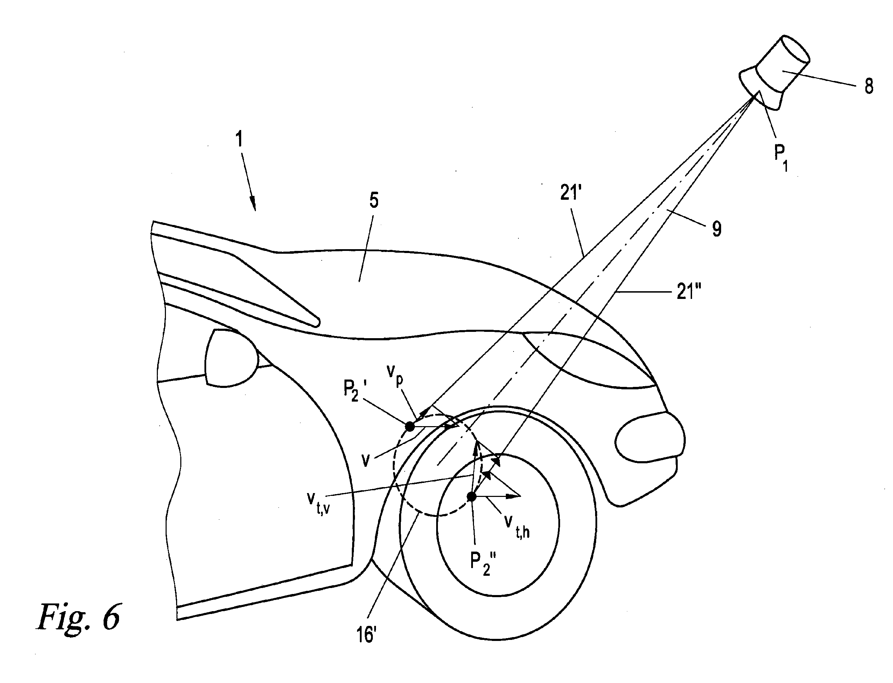

Die radgeschwindigkeitsbedingte Frequenzaufspreizung ist parasitär von einem zweiten Frequenzaufspreizungseffekt überlagert, der durch die Geometrie eines trichterförmig aufgeweiteten Messstrahls 9 selbst bedingt ist. Wie aus Fig. 6 ersichtlich, beobachtet das Radar/Lidar-Gerät 8 von einem Ort $P_1$ aus verschiedene Punkte $P_2'$, $P_2"$ im Auftreffbereich 16' des Messstrahls 9 unter jeweils einer anderen Raumrichtung 21', 21", die mit den Vertikal- und Horizontalkomponenten $v_{t,v}$ und $v_{t,h}$ der Tangentialgeschwindigkeit $v_t$ des Rades 4 bzw. der Geschwindigkeit v der Fahrzeugkarosserie 5 jeweils einen anderen Winkel im Raum einschließen. Die Projektion der Geschwindigkeit $v_{t,v}$ bzw. $v_{t,h}$ auf die jeweilige Messstrahlrichtung 21', 21" usw. im Messstrahl 9 führt dadurch über den Bereich 16, 16', 16" zu einer geometriebedingten Aufsplitterung bzw. Aufspreizung.

Die durch das sich drehende Rad hervorgerufene geschwindigkeitsbedingte Aufspreizung (Fig. 3) überlagert sich mit der geometriebedingten Aufspreizung (Fig. 6) zu dem in Fig. 4 gezeigten "realen" Empfangsfrequenzgemischverlauf 20 mit der über die Zeit t variierenden Aufspreizung F.

Wie aus Fig. 4 ersichtlich, zeigt der Empfangsfrequenzgemischverlauf 20 somit während der Passagezeitspanne $T_F$ des Rades 4 bei einem schräg von oben oder schräg von unten ($0 < \beta < 180°$) und etwa normal zur Fahrtrichtung 3 ($\gamma = 90°$) gerichteten Messstrahl 9 ein kontinuierlich ansteigendes oder - je nach Betrachtungsrichtung - abfallendes Band 22, was als Kriterium für das Auftreten eines Rades und damit zur Detektion des Rades 4 verwendet werden kann. Das Band 22 kann beispielsweise auf signalanalytische Weise durch Mittelung des jeweils auftretenden Empfangsfrequenzgemischs F, d.h. durch Analyse des Frequenzmittelwerts (welcher im wesentlichen wieder dem idealisierten Verlauf 18 entspricht) detektiert werden.

Fig. 5 zeigt eine alternative Art der Detektion des Auftretens eines ansteigenden oder abfallenden Bandes 22, u.zw. indem überprüft wird, ob der Empfangsfrequenzgemischverlauf 22 in einen vorgegebenen Umriss 22' fällt, welcher die maximalen Grenzen darstellt, innerhalb deren Empfangsfrequenzverläufe $18_0$, $18_1$, $18_2$, ..., allgemein $18_i$, für ver-

schiedene Abtastverläufe $17_0$, $17_1$, $17_2$, ..., auf verschiedenen Höhen $h_0$, $h_1$, $h_2$, ... auftreten können. Die Superposition aller möglichen Empfangsfrequenzverläufe $18_i$ für einen bestimmten Auftreffbereich 16 ergibt den vorgegebenen Umriss 22' in der Frequenz/Zeit-Ebene von Fig. 4 bzw. 5, innerhalb der ein Band 22 jedenfalls zu liegen kommt.

Die Größe und Form des Umrisses 22' hängt zwar von der Größe des Auftreffbereichs 16 ab, der globale Verlauf des Umrisses 22' über der Zeit t ist jedoch stets ansteigend oder abfallend. Durch Überprüfen, ob alle (oder zumindest der überwiegende Teil, d.h. bis auf einige wenige statistische "Ausreißer") Empfangsfrequenzmesswerte des Empfangsfrequenzgemischverlaufs 20 innerhalb des Umrisses 22' liegen, kann wieder das Auftreten eines über einen Zeitabschnitt kontinuierlich ansteigenden oder abfallenden Bandes 22 und damit das Rad 4 detektiert werden.

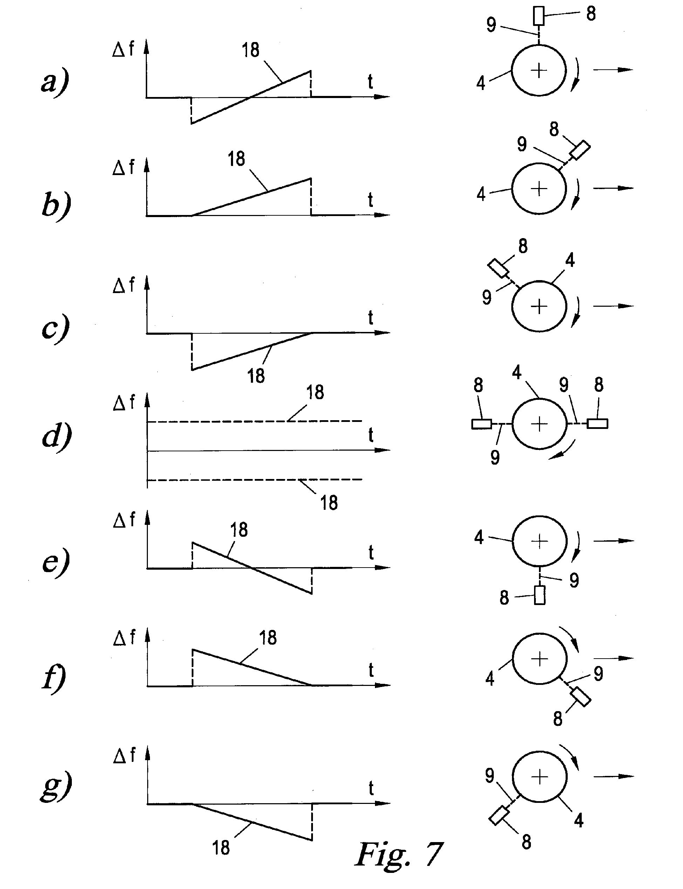

Wenn der Messstrahl 9 nicht normal zur Fahrtrichtung 3, sondern schräg ($\gamma \neq 90°$) dazu auf das Fahrzeug 1 bzw. die Räder 4 gerichtet wird, wird durch die Projektion der Horizontalkomponenten $v_{t,h}$ der Tangentialgeschwindigkeit $v_t$ des Rades 4 auf die Messstrahlrichtung eine zusätzliche Horizontalgeschwindigkeitskomponente gemessen, welche für eine bestimmte Höhe h, $h_1$ der Abtastlinie 17 jeweils konstant ist und sich in einem Offset des idealisierten Empfangsfrequenzverlaufs 18 bzw. realen Empfangsfrequenzgemischverlaufs 20 von Fig. 4 äußert. In Fig. 7 ist dies für den idealisierten Empfangsfrequenzverlauf 18 von Fig. 4 gezeigt, und nachstehende Tabelle 1 gibt die Werte von $\beta$ und $\gamma$ für die Beispiele der Fig. 7a) bis g) wider:

Tabelle 1

| Fig. 7 | β | γ |
|--------|------|---------|
| a) | 135° | 90° |
| b) | 135° | 135° |
| c) | 135° | 45° |
| d) | 90° | 45°/135° |
| e) | 45° | 90° |
| f) | 45° | 135° |
| g) | 45° | 45° |

In Kenntnis der Geschwindigkeit v, welche z.B. vom Geschwindigkeitssensor 10 oder auch vom Gerät 8 selbst gemessen wird, können die Empfangsfrequenzverläufe 18 bzw. Empfangsfrequenzgemischverläufe 20 um den jeweiligen geschwindigkeitsbedingten Anteil $v_{t,h}$ bereinigt bzw. kompensiert werden, was einer Offsetkompensation der Fig. 7a) bis g) entspricht und wieder zu dem in Fig. 4 gezeigten beispielhaften Empfangsfrequenzgemischverlauf bzw. einem dazu um die Zeitachse t gespiegelten Verlauf zurückführt.

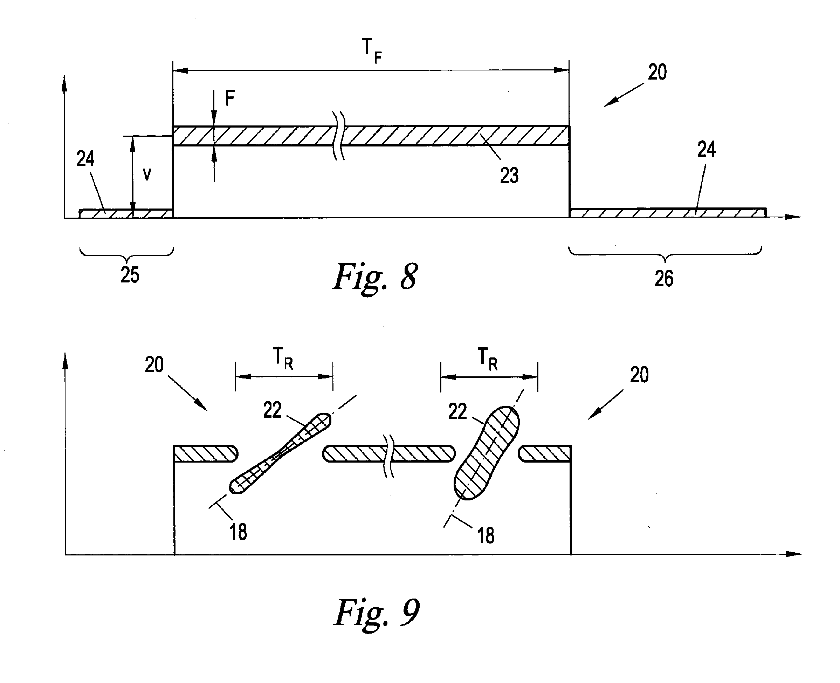

Fig. 8 zeigt die Messung eines Passagezeitfensters $T_F$ für die Passage des gesamten Fahrzeugs 1 am Gerät 8 bzw. Messstrahl 9, bevorzugt mit Hilfe des gesonderten Anwesenheitssensors 11. Der Anwesenheitssensor 11 kann beispielsweise wieder ein Radar- oder Lidargerät sein, das einen Radar- oder Lidar-Messstrahl 12 auf das passierende Fahrzeug 1 aussendet, um die Dauer $T_F$ der Fahrzeugpassage zu messen und den aufgezeichneten Empfangsfrequenzgemischverlauf 20 darauf beziehen zu können.

In Fig. 8 wurde zu Vergleichszwecken der Messstrahl 9 ausschließlich auf die Karosserie 5 des Fahrzeugs 1 gerichtet, und zwar unter einem Winkel $\gamma \neq 90°$, d.h. schräg zur Fahrtrichtung 3, sodass die Relativgeschwindigkeit v des Fahrzeugs 1 während der Fahrzeugpassage $T_F$ als Rechteck-Frequenzsprung messbar ist, aufgespreizt auf ein Empfangsfrequenzgemisch F in einem Band 23, welches ausschließlich durch die geometriebedingte Aufspreizung eines sich trichterförmig erweiternden Messstrahls 9 gemäß Fig. 6 bedingt ist.

Mit 24 ist ein außerhalb der Fahrzeugpassage $T_F$ auftretender Störsignalanteil im Empfangssignal des Lidar/Radar-Geräts 8 bezeichnet. In Kenntnis des Passagezeitfensters $T_F$ kann damit ein dem Passagezeitfenster $T_F$ unmittelbar vorausgehender Abschnitt 25 oder unmittelbar nachhergehender Abschnitt 26 aus dem Empfangsfrequenzgemischverlauf 20 entnommen und darin der Störsignalanteil 24 bestimmt werden; dieser Störsignalanteil 24 kann dann dazu verwendet werden, den Empfangsfrequenzgemischverlauf 20 um diesen Störsignalanteil 24 zu kompensieren. Beispielsweise könnte eine Frequenzanalyse der in den Abschnitten 25, 26 auftretenden Empfangsfrequenzen durchgeführt und diese aus den Empfangsfrequenzgemischen F während der Fahrzeugpassage $T_F$ gelöscht, z.B. subtrahiert, werden.

Bevorzugt wird dazu nur der der Fahrzeugpassage $T_F$ vorausgehende Abschnitt 25 verwendet, da das Fahrzeug 1 beispielsweise einen Anhänger haben könnte, welcher im nachfolgenden Abschnitt 26 sonst fälschlich als Störsignal herangezogen werden könnte.

Ferner kann die Ermittlung des Passagezeitfensters $T_F$ dazu verwendet werden, all jene Räder 4, die während des Passagezeitfensters $T_F$ detektiert werden, ein und demselben Fahrzeug 1 zuzuordnen, was von der Auswerteeinrichtung 14 der Vorrichtung 7 entsprechend berechnet werden kann.

Das Passagezeitfenster $T_F$ der Fahrzeugpassage könnte anstelle durch den gesonderten Anwesenheitssensor 11 auch direkt vom Radar/Lidar-Gerät 8 ermittelt werden, d.h. mit ein und demselben Messstrahl 9. Wenn der Messstrahl 9 unter einem Winkel von $\gamma \neq 90°$ (wie in Fig. 8) auf das Fahrzeug 1 gerichtet wird, könnte das Passagezeitfenster $T_F$ z.B. anhand der Frequenzsprünge 27, 28 des Bandes 23 ermittelt werden, und/oder aus dem Auftreten der geometriebedingten Frequenzaufspreizung im Empfangsfrequenzgemischverlauf 20.

Das Bestimmen der Relativgeschwindigkeit v des Fahrzeugs 1 könnte anstelle durch den gesonderten Geschwindigkeitssensor 10 auch z.B. vom Lidar/Radar-Gerät 8 selbst durchgeführt werden, z.B. anhand der Größe der Frequenzsprünge 27, 28 des Bandes 23.

Fig. 9 zeigt zwei beispielhafte Empfangsfrequenzgemischverläufe 20, nachdem diese einerseits um die auf die Eigengeschwindigkeit v des Fahrzeugs 1 zurückzuführenden Komponenten und andererseits um jene Störsignalanteile 24 bereinigt wurden, welche aus den vorausgehenden Abschnitt 25 ermittelt wurden. In der linken Hälfte von Fig. 9 ist das Auftreten eines kontinuierlich ansteigenden Bandes 22 im Empfangsfrequenzgemischverlauf 20 ersichtlich, welches ein Rad 4 anzeigt, für den Fall eines kleinen Auftreffbereichs 16. In der rechten Hälfte von Fig. 9 ist dieselbe Situation gezeigt, wenn der Auftreffbereich 16' des Messstrahls 9 auf dem Rad 4 größer als der halbe Raddurchmesser wird, sodass der Messstrahl 9 zu bestimmten Zeitpunkten gleichzeitig signifikante positive und negative Vertikalkomponenten $v_{t,v}$ des Rades 4 misst. Dies führt zu einem näheren "Zusammenwachsen" der Anfangs- und Endspitzen des Empfangsfrequenzgemischverlaufs 20, d.h. zu einem steileren Anstieg bzw. Abfall 18.

Die Vorrichtung 7 kann sowohl in mobiler Form realisiert werden, z.B. aufgebaut auf dem Fahrzeug 6, als auch in stationärer Form, z.B. unter Verwendung bestehender Funk-Infrastruktur einer Straße, beispielsweise unter Verwendung von WAVE- oder DSRC-Funkbaken eines Straßenmautsystems oder WLAN-Funkbaken einer straßenseitigen Internet-Infrastruktur. Dadurch können bereits vorhandene Sendeteile der WLAN-, WAVE- oder DSRC-Funkbaken als Sendeteile des Doppler-Radargeräts 8 verwendet werden; ebenso Empfangteile der Funkbaken als Empfangteile des Doppler-Radargeräts 8, oder letztere zumindest in die Empfangteile der Funkbaken integriert werden. Die Vorrichtung und das Verfahren der Erfindung können auf diese Weise z.B. als eine auf einer herkömmlichen mobilen oder stationären WLAN-, WAVE- oder DSRC-Kontrolleinrichtung oder -Funkbake laufende Softwareapplikation implementiert werden.

Bislang wurde davon ausgegangen, dass die Sendefrequenz des Radar/Lidar-Geräts 8 bzw. des Messstrahls 9 konstant ist, d.h. ihr zeitlicher Verlauf ein konstanter Verlauf ist. Es ist jedoch auch möglich, dass das Gerät 8 einen Messstrahl 9 mit einem zeitlich nicht-konstanten Sendefrequenzverlauf aussendet, beispielsweise im Falle von Frequency-Hopping-Verfahren, bei denen die Frequenz ständig - nach einem vorgegebenen bzw. bekannten Muster - wechselt. Die aufgezeichneten Empfangsfrequenz(gemisch)verläufe 18, 20 werden relativ zu dem vorbekannten zeitlichen Verlauf der Sendefrequenz des Messstrahls 9 - sei er konstant oder wechselnd - aufgezeichnet, d.h. auf diesen referenziert bzw. normiert, so dass der Effekt von bekannten Sendefrequenzverläufen kompensiert werden kann.

Die Erfindung ist demgemäß nicht auf die dargestellten Ausführungsformen beschränkt, sondern umfasst alle Varianten und Modifikationen, die in den Rahmen der angeschlossenen Ansprüche fallen.

**Patentansprüche**

1. Verfahren zur Detektion eines sich drehenden Rades (4) eines Fahrzeugs (1), das auf einer Fahrbahn (2) in einer Fahrtrichtung (3) fährt und dessen Räder (4) zumindest teilweise seitlich freiliegen, **gekennzeichnet durch** die Schritte

   Aussenden eines elektromagnetischen Messstrahls (9) mit einem bekannten zeitlichen Verlauf seiner Frequenz auf einen ersten Bereich über der Fahrbahn (2) in einer Richtung schräg zur Vertikalen (V) und normal oder schräg zur Fahrtrichtung (3);

   Empfangen eines reflektierten Messstrahls (9) und Aufzeichnen des zeitlichen Verlaufs seiner Frequenzen relativ zum bekannten Verlauf als Empfangsfrequenzgemischverlauf (20); und

   Detektieren eines Rades (4) anhand des Kriteriums eines über einen Zeitabschnitt kontinuierlich ansteigenden oder abfallenden Bandes (22) von Frequenzen im Empfangsfrequenzgemischverlauf (20).

2. Verfahren nach Anspruch 1, **dadurch gekennzeichnet, dass** das genannte Detektieren durch Auswerten des Verlaufs des Frequenzmittels (18) des Bandes (22) erfolgt.

3. Verfahren nach Anspruch 1, **dadurch gekennzeichnet, dass** das genannte Detektieren durch Überprüfen, ob das Band (22) in einen vorgegebenen Umriss (22') in der Frequenz/Zeit-Ebene fällt, erfolgt.

4. Verfahren nach einem der Ansprüche 1 bis 3, **dadurch gekennzeichnet, dass** der Messstrahl (9) normal zur Fahrtrichtung (3) schräg nach unten ausgesandt wird.

**5.** Verfahren nach einem der Ansprüche 1 bis 4, **gekennzeichnet durch** die Schritte
Messen der Geschwindigkeit (v) der Karosserie (5) des Fahrzeugs (1) relativ zu dem Ort der Aussendung des Messstrahls (9) und des Empfangs des reflektierten Messstrahls (9); und
Kompensieren des Empfangsfrequenzgemischverlaufs (20) um jene Frequenzanteile, die **durch** die Geschwindigkeit (v) der Karosserie (5) verursacht sind, bevor der genannte Schritt des Detektierens des Bandes (22) durchgeführt wird.

**6.** Verfahren nach einem der Ansprüche 1 bis 5, **gekennzeichnet durch** den Schritt
Detektieren der Anwesenheit eines Karosserieteils (5) des Fahrzeugs (1) in einem zweiten Bereich, der oberhalb des ersten Bereichs liegt, im zeitlichen Verlauf als Passagezeitfenster ($T_F$) ;
wobei das Detektieren eines Rades (4) im Empfangsfrequenzgemischverlauf (20) nur während des Passagezeitfensters ($T_F$) durchgeführt wird.

**7.** Verfahren nach Anspruch 6, **gekennzeichnet durch** die Schritte
Bestimmen eines Störsignalanteils (24) in einem dem Passagezeitfenster ($T_F$) unmittelbar vorausgehenden Abschnitt (25) des Empfangsfrequenzgemischverlaufs (20); und
Kompensieren des Empfangsfrequenzgemischverlaufs (20) im Passagezeitfenster ($T_F$) um den Störsignalanteil (24), bevor der genannte Schritt des Detektierens des Bandes (22) durchgeführt wird.

**8.** Verfahren nach Anspruch 6 oder 7, **dadurch gekennzeichnet, dass** Räder (4), die während ein und desselben Passagezeitfensters ($T_F$) detektiert werden, ein und demselben Fahrzeug (1) zugeordnet werden.

**9.** Verfahren nach einem der Ansprüche 1 bis 8, **dadurch gekennzeichnet, dass** der Messstrahl (9) einen Auftreffbereich (16, 16', 16") hat, dessen Durchmesser kleiner als ein zu detektierendes Rad ist, bevorzugt kleiner 10 cm, besonders bevorzugt kleiner 5 cm.

**10.** Verfahren nach einem der Ansprüche 1 bis 9, **dadurch gekennzeichnet, dass** der Messstrahl (9) ein von einer Richtantenne ausgesandter Radarstrahl ist, bevorzugt im Frequenzbereich über 70 GHz.

**11.** Vorrichtung zur Detektion eines sich drehenden Rades (4) eines Fahrzeugs (1), das auf einer Fahrbahn (2) in einer Fahrtrichtung (3) fährt und dessen Räder (4) zumindest teilweise seitlich freiliegen, **gekennzeichnet durch**
ein Doppler-Lidar- oder -Radargerät (8), das einen elektromagnetischen Messstrahl (9) mit einem bekannten zeitlichen Verlauf seiner Frequenz schräg zur Vertikalen (V) und normal oder schräg zur Fahrtrichtung (3) auf ein Ziel über der Fahrbahn (2) aussendet und
den zeitlichen Verlauf der Frequenzen des vom Ziel reflektierten Messstrahls relativ zum bekannten Verlauf als Empfangsfrequenzgemischverlauf (20) aufzeichnet, und
eine nachgeordnete Auswerteeinrichtung (14), welche dafür ausgebildet ist, ein Rad (4) anhand des Kriteriums eines über einen Zeitabschnitt kontinuierlich ansteigenden oder abfallenden Bandes (20) von Frequenzen im Empfangsfrequenzgemischverlauf (20) zu detektieren.

**12.** Vorrichtung nach Anspruch 11, **gekennzeichnet durch** einen mit der Auswerteeinrichtung (14) verbundenen Sensor (10) zum Messen der Geschwindigkeit (v) der Karosserie (5) des Fahrzeugs (1), wobei die Auswerteeinrichtung (14) den Empfangsfrequenzgemischverlauf (20) um jene Frequenzanteile, die **durch** die Geschwindigkeit (v) der Karosserie (5) verursacht sind, kompensiert.

**13.** Vorrichtung nach Anspruch 11 oder 12, **gekennzeichnet durch** einen mit der Auswerteeinrichtung (14) verbundenen Sensor (11), der die Anwesenheit eines Karosserieteils (5) des Fahrzeugs (1) oberhalb des Bereichs, auf den der Messstrahl (9) gerichtet ist, im zeitlichen Verlauf als Passagezeitfenster ($T_F$) detektiert, wobei die Auswerteeinrichtung (14) ein Rad (4) im Empfangsfrequenzgemischverlauf (20) nur während des Passagezeitfensters ($T_F$) detektiert.

**14.** Vorrichtung nach Anspruch 13, **dadurch gekennzeichnet, dass** die Auswerteeinrichtung (14) ferner dafür ausgebildet ist, einen Störsignalanteil (24) in einem dem Passagezeitfenster ($T_F$) unmittelbar vorausgehenden Abschnitt (25) des Empfangsfrequenzgemischverlaufs (20) zu bestimmen und den Empfangsfrequenzgemischverlauf (20) im Passagezeitfenster ($T_F$) um den Störsignalanteil (24) zu kompensieren.

**15.** Vorrichtung nach einem der Ansprüche 11 bis 14, **dadurch gekennzeichnet, dass** das Doppler-Lidar- oder -Radargerät (8) auf einer mobilen Plattform (6) montiert ist, bevorzugt einem Kontrollfahrzeug.

**Claims**

1. A method for detecting a rotating wheel (4) of a vehicle (1) that is travelling on a roadway (2) in a travel direction (3), the wheels (4) of which are at least partially exposed laterally, the method being **characterised by** the steps
emitting an electromagnetic measurement beam (9) having a known temporal progression of its frequency onto a first section above the roadway (2) in a direction in a slant with respect to the vertical (V) and normal or at a slant with respect to the travel direction (3);
receiving a reflected measurement beam (9) and recording the temporal progression of its frequencies relative to the known progression as a reception frequency mixture progression (20); and
detecting a wheel (4) by means of the criterion of a band (22) of frequencies which is continuously inclining or declining over a period of time in the reception frequency mixture progression (20).

2. The method of claim 1, **characterised in that** said detecting is carried out by evaluating the progression of the frequency average (18) of the band (22).

3. The method of claim 1, **characterised in that** said detecting is carried out by checking if the band (22) falls into a given contour (22') in the frequency/time plane.

4. The method of any one of the claims 1 to 3, **characterised in that** the measurement beam (9) is emitted normally with respect to the travel direction (3) at a slant downwards.

5. The method of any one of the claims 1 to 4, **characterised by** the steps
measuring the velocity (v) of the body (5) of the vehicle (1) relative to the location of emission of the measurement beam (9) and reception of the reflected measurement beam (9); and
compensating the reception frequency mixture progression (20) by those frequency parts which are caused by the velocity (v) of the vehicle body (5), before said detecting of the band (22) is conducted.

6. The method of any one of the claims 1 to 5, **characterised by** the step
detecting the presence of a part of the body (5) of the vehicle (1) in a second section which lies above the first section in the temporal progression as a passage time window ($T_F$);
wherein detecting the wheel (4) in the reception frequency mixture progression (20) is only conducted during said passage time window ($T_F$).

7. The method of claim 6, **characterised by** the steps determining an interfering signal fraction (24) in a section (25) of the reception frequency mixture progression (20) immediately preceding the passage time window ($T_f$); and compensating the reception frequency mixture progression (20) in the passage time window ($T_f$) by the interfering signal fraction (24), before said step of detecting the band (22) is conducted.

8. The method of claim 6 or 7, characterised that wheels (4), which are detected during the same passage time window ($T_F$), are assigned to the very same vehicle (1).

9. The method of any of the claims 1 to 8, **characterised in that** the measuring beam (9) has an area of incidence (16, 16', 16"), whose diameter is less than a wheel which is to be detected, preferably less than 10 cm, especially preferred less than 5 cm.

10. The method of any of the claims 1 to 9, **characterised in that** the measuring beam (9) is a radar beam emitted by a directional antenna, preferably in a frequency range above 70 GHz.

11. An apparatus for detecting a rotating wheel (4) of a vehicle (1) that is travelling on a roadway (2) in a travel direction (3), the wheels (4) of which are at least partially exposed laterally, the apparatus being **characterised by**
a Doppler-lidar device or a Doppler-radar device (8), which emits an electromagnetic measurement beam (9) having a known temporal progression of its frequency onto a target above the roadway (2) in a direction in a slant with respect to the vertical (V) and normal or in a slant with respect to the travel direction (3); and
which records the temporal progression of the frequencies of the measurement beam reflected by the target, relative to the known progression, as a reception frequency mixture progression (20); and
a subsequent evaluation device (14) configured to detect a wheel (4) by means of the criterion of a band (22) of frequencies which is continuously inclining or declining within a period of time, in the reception frequency mixture progression (20).

12. The apparatus of claim 11, **characterised by** a sensor (10) connected to the evaluation device (14) for measuring the velocity (v) of the body (5) of the vehicle (1), wherein the evaluation device (14) compensates the reception frequency mixture progression (20) by those frequency parts which are caused by the velocity (v) of the vehicle body (5).

13. The apparatus according to claim 11 or 12, **characterised by** a sensor connected to the evaluation device (14) which detects the presence of a part of the body (5) of the vehicle (1) above that section onto which the measurement beam (9) is directed in the temporal progression as a passage time window ($T_F$), wherein the evaluation device (14) detects a wheel (4) in the reception frequency mixture progression (20) only during said passage time window ($T_F$).

14. The apparatus of claim 13, **characterised in that** the evaluation device is further configured to determine an interfering signal fraction (24) in a section (25) of the reception frequency mixture progression (20) immediately preceding said passage time window ($T_f$) and to compensate the reception frequency mixture progression (20) in the passage time window ($T_f$) by said interfering signal fraction (24).

15. The apparatus of any one of the claims 11 to 14, **characterised in that** the Doppler-lidar device or Doppler-radar device (8) is mounted on a mobile platform (6), preferably a control vehicle.

**Revendications**

1. Procédé pour la détection d'une roue (4) en rotation d'un véhicule (1) circulant sur une voie de circulation (2) dans une direction de circulation (3) et dont les roues (4) sont au moins partiellement dégagées latéralement, **caractérisé par** les étapes suivantes :

   émission d'un faisceau de mesure électromagnétique (9) dont la fréquence présente une évolution connue dans le temps, vers une première zone au-dessus de la voie de circulation (2) dans une direction oblique par rapport à la verticale (V) et normale ou oblique par rapport à la direction de circulation (3) ;
   réception d'un faisceau de mesure réfléchi (9) et enregistrement de l'évolution de sa fréquence dans le temps par rapport à l'évolution connue, en tant qu'évolution composite de fréquences de réception (20) ; et
   détection d'une roue (4) à l'aide du critère d'une bande (22) de fréquences montant ou régressant continuellement sur une tranche horaire dans l'évolution composite de fréquences de réception (20).

2. Procédé selon la revendication 1, **caractérisé en ce que** ladite détection est réalisée en évaluant l'évolution du moyen fréquentiel (18) de la bande (22).

3. Procédé selon la revendication 1, **caractérisé en ce que** ladite détection est effectuée en vérifiant si la bande (22) est comprise dans un contour prédéfini (22') dans le plan fréquence-temps.

4. Procédé selon l'une des revendications 1 à 3, **caractérisé en ce que** le faisceau de mesure (9) est émis de façon normale par rapport à la direction de circulation (3), de façon oblique vers le bas.

5. Procédé selon l'une des revendications 1 à 4, **caractérisé par** les étapes suivantes :

   mesure de la vitesse (v) de la carrosserie (5) du véhicule (1) par rapport au lieu d'émission du faisceau de mesure (9) et de réception du faisceau de mesure réfléchi (9) ; et
   compensation de l'évolution composite de fréquences de réception (20) à l'aide des composantes de fréquence occasionnées par la vitesse (v) de la carrosserie (5), avant l'exécution de ladite étape de détection de la bande (22).

6. Procédé selon l'une des revendications 1 à 5, **caractérisé par** l'étape suivante :

   détection de la présence d'une composante de carrosserie (5) du véhicule (1) dans une deuxième zone située au-dessus de la première zone, dans l'évolution dans le temps en tant que fenêtre temporelle de passage ($T_F$) ;
   dans lequel la détection d'un roue (4) dans l'évolution composite de fréquences de réception (20) n'est effectuée que dans la fenêtre temporelle de passage ($T_F$).

7. Procédé selon la revendication 6, **caractérisé par** les étapes suivantes :

détermination d'une composante de signal parasite (24) dans une section (25) de l'évolution composite de fréquences de réception (20) précédant immédiatement la fenêtre temporelle de passage ($T_F$) ; et compensation de l'évolution composite de fréquences de réception (20) dans la fenêtre temporelle de passage ($T_F$) à l'aide de la composante de signal parasite (24), avant l'exécution de ladite étape de détection de la bande (22).

8. Procédé selon la revendication 6 ou 7, **caractérisé en ce que** des roues (4) détectés dans une seule et même fenêtre temporelle de passage ($T_F$) sont attribués à un seul et même véhicule (1).

9. Procédé selon l'une des revendications 1 à 8, **caractérisé en ce que** le faisceau de mesure (9) présente une zone d'incidence (16, 16', 16") dont le diamètre est inférieur à celui d'une roue à détecter, de préférence inférieur à 10 cm, de façon particulièrement préférée inférieur à 5 cm.

10. Procédé selon l'une des revendications 1 à 9, **caractérisé en ce que** le faisceau de mesure (9) est un faisceau radar émis par une antenne directive, de préférence dans la plage de fréquence au-dessus de 70 GHz.

11. Dispositif pour la détection d'une roue (4) en rotation d'un véhicule (1) circulant dans une direction de circulation (3) sur une voie de circulation (2) et dont les roues (4) sont au moins partiellement dégagées latéralement, **caractérisé par** :

   un dispositif radar ou lidar Doppler (8) émettant un faisceau de mesure électromagnétique (9) dont la fréquence présente une évolution connue dans le temps, oblique par rapport à la verticale (v) et normale ou oblique par rapport à la direction de circulation (3), vers une cible au-dessus de la voie de circulation (2) ; et enregistrant l'évolution dans le temps des fréquences du faisceau de mesure réfléchi par la cible, par rapport à l'évolution connue, en tant qu'évolution composite de fréquences de réception (20), et un dispositif d'évaluation (14) raccordé en aval, lequel est conçu pour détecter une roue (4) à l'aide du critère d'une bande (20) de fréquences montant ou régressant continuellement sur une tranche horaire dans l'évolution composite de fréquences de réception (20).

12. Dispositif selon la revendication 11, **caractérisé par** un capteur (10) relié au dispositif d'évaluation (14) pour la mesure de la vitesse (v) de la carrosserie (5) du véhicule (1), le dispositif d'évaluation (14) compensant l'évolution composite de fréquences de réception (20) à l'aide des composantes de fréquence occasionnées par la vitesse (v) de la carrosserie (5).

13. Dispositif selon la revendication 11 ou 12, **caractérisé par** un capteur (11) relié au dispositif d'évaluation (14), détectant la présence d'une composante de carrosserie (5) du véhicule (1) au-dessus de la zone vers laquelle est dirigé le faisceau de mesure (9), dans l'évolution dans le temps en tant que fenêtre temporelle de passage ($T_F$), le dispositif d'évaluation (14) ne détectant une roue (4) dans l'évolution composite de fréquences de réception (20) que dans la fenêtre temporelle de passage ($T_F$).

14. Dispositif selon la revendication 13, **caractérisé en ce que** le dispositif d'évaluation (14) est en outre conçu pour déterminer une composante de signal parasite (24) dans une section (25) de l'évolution composite de fréquences de réception (20) précédant immédiatement la fenêtre temporelle de passage ($T_F$), et pour compenser l'évolution composite de fréquences de réception (20) dans la fenêtre temporelle de passage ($T_F$) à l'aide de la composante de signal parasite (24).

15. Dispositif selon l'une des revendications 11 à 14, **caractérisé en ce que** le dispositif radar ou lidar Doppler (8) est monté sur une plateforme mobile (6), de préférence sur un véhicule de contrôle.

*Fig. 1*

*Fig. 2*

*Fig. 3*

*Fig. 4*

*Fig. 5*

*Fig. 6*

*Fig. 7*

*Fig. 8*

*Fig. 9*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008037233 A1